(19) Europäisches Patentamt / European Patent Office / Office européen des brevets

(11) **EP 4 285 301 B1**

(12) **EUROPEAN PATENT SPECIFICATION**

(45) Date of publication and mention
of the grant of the patent:
**11.03.2026   Bulletin 2026/11**

(21) Application number: **21702948.7**

(22) Date of filing: **29.01.2021**

(51) International Patent Classification (IPC):
***G06Q 10/04*** *(2023.01)*

(52) Cooperative Patent Classification (CPC):
**G06Q 10/04**

(86) International application number:
**PCT/EP2021/052140**

(87) International publication number:
**WO 2022/161620 (04.08.2022 Gazette 2022/31)**

(54) **METHOD OF MATERIAL FLOW OPTIMIZATION**

VERFAHREN ZUR MATERIALFLUSSOPTIMIERUNG

PROCÉDÉ D'OPTIMISATION DE FLUX DE MATIÈRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2023   Bulletin 2023/49**

(73) Proprietor: **ABB Schweiz AG
5400 Baden (CH)**

(72) Inventors:
• **LINDKVIST, Rickard**
**725 91 Västerås (SE)**
• **LINDER, Jonas**
**464 93 Mellerud (SE)**
• **BHALODI, Kalpesh**
**65451 Kelsterbach (DE)**
• **JUHLIN, Prerna**
**69126 Heidelberg (DE)**
• **SCHLAKE, Jan-Christoph**
**64293 Darmstadt (DE)**
• **JANKA, Dennis**
**69121 Heidelberg (DE)**
• **POTSCHKA, Andreas**
**38642 Goslar (DE)**

(74) Representative: **Zimmermann & Partner
Patentanwälte mbB
Postfach 330 920
80069 München (DE)**

(56) References cited:
US-A1- 2019 066 236      US-A1- 2019 072 943
US-A1- 2020 142 364      US-B2- 7 340 328

• DANGELMAIER WILHELM ET AL: "d 3 FACT
INSIGHT: A SIMULATION-TOOL FOR
MULTIRESOLUTION MATERIAL FLOW
MODELS", PROCEEDINGS 16TH EUROPEAN
SIMULATION SYMPOSIUM, ESS 2004
BUDAPEST, OCTOBER 17-20 2004, 17 October
2004 (2004-10-17), pages 17 - 22, XP093229769,
Retrieved from the Internet <URL:https://www.
scs-europe.net/services/ess2004/pdf/manuf-12.
pdf>
• GEI□LER BJ□RN ET AL: "Penalty Alternating
Direction Methods for Mixed-Integer
Optimization: A New View on Feasibility Pumps",
INTERNET ARTICLE, 31 July 2017 (2017-07-31),
XP093273220, Retrieved from the Internet
<URL:https://arxiv.org/pdf/1707.09891>
• WIKIPEDIA: "Linear programming", INTERNET
ARTICLE, 3 December 2020 (2020-12-03),
XP055845253, Retrieved from the Internet
<URL:https://en.wikipedia.org/w/index.php?
title=Linear_programming&oldid=992098657>
[retrieved on 20210928]

## Description

Field of the disclosure

The present disclosure relates to a method of material flow optimization. Embodiments relate to an integrated optimizing system for material flow optimization.

Technical background:

In many industrial areas, simulation codes are available that can deliver high-fidelity predictions of the future dynamics of complex systems, e.g. of the material flow in a production process. Such simulations are already used heavily in order to improve the system with respect to prescribed objectives, e.g., safety, efficiency, or environmental impact. Improvements to the system are often derived manually in a trial and error fashion.

In principle, optimization methods offer a systematic approach to improvement tasks, e.g., Mixed-Integer Linear Programming (MILP) formulations. However, these methods cannot be applied readily to complex systems due to a lack of information/data as well as nonlinear and discontinuous effects. Instead, reduced models must be derived, e.g., by linearization and averaging, in order to leverage the power of MILP techniques, at the expense of a loss of prediction power. As a result, the derived system inputs are optimal for the reduced models, but not necessarily for the real-world system.

Document Wikipedia: "Linear programming", Internet Article, 3 December 2020, XP055845253, Retrieved from the Internet: URL: https://en.wikipedia.org/w/index.php?title=Linear_programming&oldid=992098657 [retrieved on 2021-09-28] describes a method to achieve the best outcome in a mathematical model whose requirements and objective are represented by linear relationships.

Documents US 2019/072943 A1, US 2019/066236 A1, and US 2020/142364 A1 describe an optimization of central plant control systems where a high-level optimization involves iterations of low-level simulations.

Document Dangelmaier Wilhelm ET AL: "D 3 FACT INSIGHT: A SIMULATION-TOOL FOR MULTIRESOLUTION MATERIAL FLOW MODELS", Proceedings 16th European Simulation Symposium, ESS 2004 Budapest, October 17-20 2004, 17 October 2004, pages 17-22, XP093229769, Retrieved from the Internet: URL: https://www.scs-europe.net/services/ess2004/pdf/manuf-12.pdf relates to multiresolution simulation, material flow simulation, virtual reality, and digital factories. In a virtual environment, only a part of the simulation model viewed by the user is simulated in high resolution. The parts of the model the user ignored or cannot view are simulated on a rough level.

Document US 7 340 328 B2 describes a method of planning over a predetermined period of time a use of resources in a railway system having a plurality of trains for movement along a network of track to reduce a cost of implementing the plan. The method includes developing strategic schedule constraints in a rule based inference engine, developing a detailed movement plant for the plurality of trains along the network, and controlling a train in accordance with settings for implementing the plan.

Document Geiβler Björn ET AL: "Penalty Alternating Direction Methods for Mixed-Integer Optimization: A New View on Feasibility Pumps", INTERNET ARTICLE, 31 July 2017, XP093273220, Retrieved from the Internet: URL: https://arxiv.org/pdf/1707.09891 describes feasibility pumps as highly effective primal heuristics for mixed-integer linear and nonlinear optimization.

It is therefore an object of the present disclosure to overcome at least some of the above-mentioned problems at least partially.

Summary of the disclosure

The invention is set out in the appended set of claims.

In view of the above, a method of material flow optimization in an industrial process by using an integrated optimizing system is provided. The integrated optimizing system includes: a high-level optimizer module describing the material flow by coarse high-level process parameters x and including an optimization program for the high-level process parameters x, the optimization program being dependent on high-level model parameters A, b, c and including an objective function subject to constraints; a low-level simulation module for simulating the material flow, the low-level simulation module including a low-level simulation function adapted for obtaining detailed low-level material flow data F based on the high-level process parameters x; and an aggregator module including an aggregator function adapted for calculating the high-level model parameters A, b, c based on the low-level material flow data F. The method includes approaching an optimum value of the objective function by iteratively modifying the high-level process parameters x, wherein an iteration includes: carrying out, by the low-level simulation module, a low-level simulation thereby obtaining the detailed low-level material flow data F; aggregating, by the aggregator module, the low-level material flow data F thereby calculating, from the low-level material flow data F, aggregated high-level model parameters $f_A$, $f_b$, $f_c$; inputting the aggregated high-level model parameters $f_A$, $f_b$, $f_c$ into the optimization program. Here, parameter indications such as F, x, A, b, c, $f_A$, $f_b$, $f_c$ are mentioned only for illustration purposes.

Also, an integrated optimizing system for material flow optimization according to the features of claim 12 is provided.

The invention is defined by the independent claims and preferred features are set out in the dependent claims.

Brief description of the Figures:

The details will be described in the following with reference to the figures, wherein

Fig. 1     is a chart illustrating a method of material flow optimization according to aspects of the present disclosure;

Fig. 2     is a schematic illustration of an industrial process being modeled in the context of a method of material flow optimization according to aspects of the present disclosure;

Figs. 3     is a flow chart illustrating a method of material flow optimization according to aspects of the present disclosure;

Fig. 4     is a flow chart illustrating a method of material flow optimization according to aspects of the present disclosure;

Fig. 5     is a schematic illustration of an industrial process being modeled in the context of a method of material flow optimization according to aspects of the present disclosure;

Fig. 6     shows charts illustrating a relaxed solution of an optimization program according to aspects of the present disclosure;

Fig. 7     shows charts illustrating solutions of an optimization program according to aspects of the present disclosure; and

Fig. 8     shows charts illustrating solutions of an optimization program according to aspects of the present disclosure.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

The present disclosure provides methods of coupling a high-fidelity simulation code (low-level simulation function) with a low-fidelity optimizer (optimization program for high-level process parameters). The solution is based on coupling the simulation code and the optimizer via an aggregator code (aggregator function). The output of the simulation code is used as input to the aggregator code, which outputs the parameters for the optimizer. The output of the optimizer may be fed back into the simulation code, giving rise to a circular data dependency.

With methods according to the present disclosure, a systematic approach to improvement tasks can be provided. Integrating simulation aspects yields a holistic optimization method. It is an advantage that existing simulation code may be used to perform an optimization. Reusability of the low-level, detailed simulation code for the high-level, coarser optimization program is highly beneficial because trusted products exist, often containing a substantial amount of concentrated expertise.

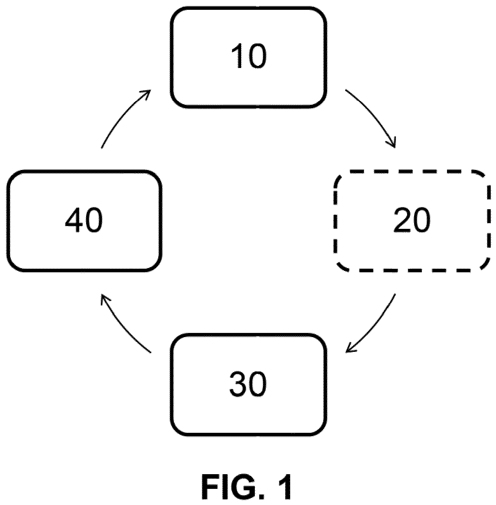

Fig. 1 is a chart illustrating a method of material flow optimization according to aspects of the present disclosure. The method is a method of material flow optimization in an industrial process by using an integrated optimizing system.

The integrated optimizing system includes a high-level optimizer module 10 describing the material flow by coarse high-level process parameters $x$ and including an optimization program for the high-level process parameters $x$, the optimization program includes an objective function subject to constraints. Herein, the constraints are included in the term optimization program. The optimization program is dependent on high-level model parameters $A$, $b$, $c$.

The integrated optimizing system further includes a low-level simulation module 30 for simulating the material flow, the low-level simulation module 30 including a low-level simulation function adapted for obtaining detailed low-level material flow data F based on the high-level process parameters x. In particular, the low-level material flow data F is consistent with the high-level process parameters x.

The low-level simulation module may provide soft sensor capabilities. In particular, any of the following may be provided by the low-level simulation module: estimated values of unmeasured parameters or predicted future values of measured parameters. While using a low-level simulation module may require more time to calculate results, its capability to predict future values of parameters can substantially increase the accuracy of calculated process parameters, as compared to a sole use of an optimization module.

Optionally, a disaggregator 20 may be provided for receiving the high-level process parameters x and determining, based on the high-level process parameters x, low-level process parameters for the low-level simulation function. The disaggregator determines more detailed low-level process parameters consistent with the high-level process parameters x, based on a heuristic algorithm and/or on a low-level optimization routine.

The integrated optimizing system further includes an aggregator module 40 including an aggregator function adapted for calculating the high-level model parameters A, b, c based on the low-level material flow data F.

In the context of the present disclosure, the expression "high level" is particularly to be understood as indicating any of: fewer degrees of freedom describing a process, a coarse time scale, or linearized modeling functions. According to certain aspects of the disclosure, a high-level optimizer module can also consider nonlinearities like binary decision functions. For example, a decision if an additional conveyor belt should be used for transport of a material could be considered. Generally, high-level optimizer module may be less accurate and cover less short-term effects than low-level simulation modules.

In the context of the present disclosure, the expression "low level" is particularly to be understood as indicating any of: more degrees of freedom describing a process, a fine-grained time scale, or non-linear modeling functions.

Thus, a difference between the high-level parameters and the low-level data is that the high-level parameters have fewer degree of freedom (are used in a coarser model of the process) than the low-level data. The aggregator function $a$ can therefore also be described as a projection function receiving the more detailed (more degrees of freedom) low-level material flow data and determining therefrom (projecting them onto) the corresponding coarser (less degrees of freedom) high-level parameters.

The method includes approaching an optimum value of the objective function by iteratively modifying the high-level process parameters x, i.e., finding the optimum process parameters x optimizing the objective function. The optimum value of the objective function may be a maximum or a minimum value.

An iteration includes carrying out, by the low-level simulation module, a low-level simulation, thereby obtaining the detailed low-level material flow data F. The input to the low-level simulation may be process conditions based on which the simulation is carried out. The process conditions may be process parameters fully specifying the process to be simulated, or more coarse conditions according to which process parameters are determined, e.g., by a low-level heuristic (e.g., partial optimization) routine. These input process conditions may be, for example, random or predefined initial process conditions or, for later iterations, process conditions based on the output from the high-level optimization of the previous iteration (see below).

The iteration further includes aggregating, by the aggregator module, the low-level material flow data F, thereby calculating, from the low-level material flow data F, aggregated high-level model parameters $f_A$, $f_b$, $f_c$. The iteration further includes inputting the aggregated high-level model parameters $f_A$, $f_b$, $f_c$. into the optimization program. If $a$ designates the aggregator function, then the aggregated high-level model parameters can be described as $f_A = a_A(F)$, $f_b = a_b(F)$, $f_c = a_c(F)$.

An optimization program, as described herein may also be called an optimization problem. In particular, the optimization program includes an objective function to be optimized over x, subject to constraints included in the optimization program. The objective function may include a penalty function. A penalty function is particularly to be understood as a term added to an objective function, the term including a penalty parameter multiplied by a measure of properties of the solution that are to be penalized, such as violation of constraints. The penalty function may also be called penalty term.

If we assume for simplicity that finding an optimal equates to finding a minimum, optimizing over x may be understood as finding a series of x that approaches the minimum. An optimum can likewise also be a maximum. The objective function may depend on further variables other than x, and may be optimized for at least some of the other variables as well. For example, the objective function can be the model objective function of the high-level model, or a derived function with additional terms and dependencies, e.g. including a penalty function. The objective function may be minimized both with respect to x and with respect to further variables. Additionally or alternatively, the high-level process parameters may include proxy process parameters $\tilde{x}$ iteratively approaching the high-level process parameters x.

According to an aspect of the present disclosure, the low-level simulation may be carried out based on high-level process parameters including process parameters x obtained in a previous iteration. The process parameters x may be included directly into the low-level simulation, or may optionally be disaggregated for obtaining suitable low-level process parameters used for the low-level simulation.

The proxy process parameters $\tilde{x}$ are further input parameters of the optimization program. In particular, the objective function includes a proxy process parameter penalty term penalizing a deviation between the proxy process parameters $\tilde{x}$ and the high-level process parameters x. More particularly, the proxy process parameter penalty term uses the L1 norm. The low-level simulation function may calculate, particularly serve to calculate, the low-level material flow data F based on the proxy process parameters $\tilde{x}$.

According to an aspect of the present disclosure, the low-level simulation function includes any of: a low-level optimization program or a disaggregation function. The low-level optimization program particularly includes an objective function to be optimized.

According to an aspect of the present disclosure, the low-level simulation includes a nonlinear model to the process parameters x. In other words, a dependence of the simulation function on at least one of the process parameters x can be nonlinear. According to an aspect of the present disclosure, the aggregator function maps the low-level material flow data F onto high-level model parameters $f_A$, $f_b$, $f_c$.

According to an aspect of the present disclosure, the optimization program uses, as the high-level model parameters A, b, c, respective aggregated high-level model parameters $f_A(\tilde{x})$, $f_b(\tilde{x})$, $f_c(\tilde{x})$ obtained in the aggregating step performed by the aggregator module.

Additionally or alternatively, the optimization program may use, as the high-level model parameters A, b, c, respective proxy model parameters $\tilde{A}, \tilde{b}, \tilde{c}$ iteratively approaching the aggregated high-level model parameters $f_A$, $f_b$, fc. The proxy model parameters $\tilde{A}, \tilde{b}, \tilde{c}$ are further input parameters of the optimization program. In particular, the objective function includes a proxy model parameter penalty term penalizing a deviation between the proxy model parameters $\tilde{A}, \tilde{b}, \tilde{c}$ and the high-level model parameters $f_A$, $f_b$, $f_c$. More particularly, the proxy model parameter penalty term uses the L1 norm.

According an aspect of the present disclosure, the objective function is

$$c^T x \qquad\qquad (1'),$$

subject to boundary conditions

$$Ax = b \qquad\qquad (2'),$$

wherein c, x are vectors of length n, b is a vector of length m, and A is an m×n matrix.

The optimization program may use, as the high-level model parameters A and c in expressions (1), (2) the aggregated high-level model parameters $f_A(\tilde{x})$, $f_c(\tilde{x})$ obtained in the aggregating step performed by the aggregator module.

Additionally or alternatively, the optimization program may use, as the high-level model parameter b in expression (2), a proxy model parameter b iteratively approaching the aggregated high-level model parameter $f_b$.

The objective function is linear, particularly piecewise linear, as a function of the high-level process parameters x. The objective function is linear, particularly piecewise linear, as a function of the high-level model parameters A, b, c. The objective function is linear, particularly piecewise linear, as a function of the proxy parameters $\tilde{A}, \tilde{b}, \tilde{c}$.

According to an aspect of the present disclosure, elements of a vector x of an optimization program may be integer variables, particularly positive integer variables. Likewise, elements of the vector x may be binary variables selected from 0 and 1. The proxy variables $\tilde{x}, \tilde{b}$ are continuous variables. In particular, the proxy variables $\tilde{x}, \tilde{b}$ are not integer variables.

According to an aspect of the present disclosure, an iteration of the method, particularly starting from the second iteration, includes: carrying out the low-level simulation based on the high-level process parameters x obtained by the previous high-level optimization, thereby obtaining the low-level material flow data F. The high-level process parameters x obtained by the previous high-level optimization may be understood as the high-level process parameters x provided in the previous iteration's step of inputting the aggregated high-level model parameters $f_A$, $f_b$, $f_c$ into the optimization program.

The method may further include: carrying out the high-level optimization based on the aggregated high-level model parameters $f_A$, $f_b$, $f_c$ obtained by aggregating the low-level material flow data F obtained by the previous low-level simulation, thereby obtaining the high-level process parameters x. The previous low-level simulation is particularly to be understood as the present iteration's step of carrying out a low-level simulation.

According to an aspect of the present disclosure, the output of the low-level simulation module is used as input to the aggregator module. The aggregator module may output the high-level model parameters to be used in the high-level optimizer module as an input for the optimization.

The output of the high-level optimizer module, particularly the high-level process parameters, is then fed, particularly in the next iteration, as an input to the low-level simulation module. In particular, a circular data dependency is thereby used in an iterative solution for the optimum. The method may include additional intermediate steps of disaggregation and further optimization prior to feeding input to the low-level simulation module. The intermediate steps can be particularly beneficial if the input to the low-level simulation module has more degrees of freedom than the high-level process parameters. In particular, the integrated optimizing system can include a disaggregator module 40 including a disaggregator function.

According to an aspect of the present disclosure, the proxy process parameter penalty term and/or the proxy model parameter penalty term contains a penalty multiplier $\rho$. The method is particularly a penalty alternating directions method. The method may include defining the penalty multiplier $\rho$. The method may further include an inner iterative loop in which the optimum value of the objective function is approached by a high-level optimization code iteratively modifying the high-level process parameters x.

The method may further include an outer iterative loop in which the penalty multiplier $\rho$ is modified depending on an optimizing criterion for the inner loop. For example, when the optimizing criterion for the inner loop is met, the penalty multiplier $\rho$ may be increased. The penalty multiplier $\rho$ is for example modified by a gradient-based optimization algorithm. In particular, the method runs the inner loop within the outer loop. More particularly, the method alternately runs the inner loop and the outer loop.

According to an aspect of the present disclosure, the method includes generating sensitivity data by an adjoint algorithmic differentiation analysis step.

An exemplary optimization module according to aspects described herein can yield optimal medium decisions based on average flows with a time resolution of work shifts. In this case the decision variables are binary truck dispatch indicators, binary order acceptances, or continuous processor flow rates.

It is common that a resulting optimization problem is a mixed-integer linear programming (MILP) problem, which can be written in standard form as

$$\min c^T x \qquad \text{over } x \in \mathbb{R}^n \qquad (1)$$

$$\text{subject to} \qquad Ax = b \in \mathbb{R}^m,$$

$$x \geq b \in \mathbb{R}^m,$$

$$x_i \in \{0, 1\} \; for \; i \in I.$$

Here, the variables x include decision variables as well as system state variables (such as material flows). $c \in \mathbb{R}^n$ denotes the coefficients of the linear objective function. The equality constraints $Ax = b$ encode mass conservation and component couplings. $I \subseteq \{1, ..., n\}$ includes the indices of binary decision variables within the vector x.

The MILP input data $(A, b, c)$ is usually based on historical data aggregated into shift-averaged values. Conventionally, it is a modelling assumption that $(A, b, c)$ do not depend on the decision variables x. This assumption, however, is a gross simplification, motivated by the desire to use MILP-technology for the practical solution of problem (I). In fact, there is a dependence of $(A, b, c)$ on the decision variables in x.

We assume that we have a simulation model that maps decision variables x onto predictions $F(x)$ for the material flow data (instead of historical data). We assume here that $F \colon \mathbb{R}^n \to \mathbb{R}^d$ is continuous and piecewise differentiable, but must be treated as a black-box model that admits only lightly invasive modifications. Furthermore, we assume that we can aggregate the material flow data F(x) into MILP input data via another differentiable function $a \colon \mathbb{R}^d \to \mathbb{R}^{m \times n} \times \mathbb{R}^m \times \mathbb{R}^n$. We denote the composition of prediction and aggregation by $f = a \circ f \colon \mathbb{R}^n \to \mathbb{R}^{m \times n} \times \mathbb{R}^m \times \mathbb{R}^n$. We refer to the components of $f$ by indices A, b, c, resulting in $f(x) = (f_A(x), f_b(x), f_c(x))$, which could serve as input data to problem (1). This gives rise to a circular data dependency as depicted in Fig. 1.

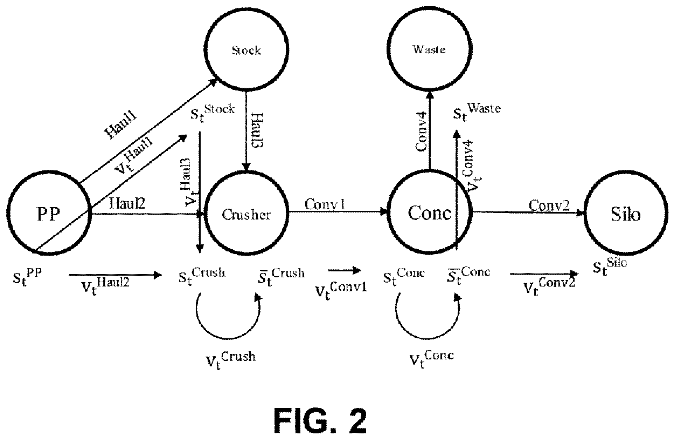

Fig. 2 illustrates schematically of an industrial process being modeled in the context of a method of material flow optimization described herein. The figure is a diagram representing the low-level simulation of the industrial process. The industrial process includes various stages (here from left to right: PP as the process beginning, a Crusher, a Concentrator, and a final storage silo, with Stocks and Waste production modelled as shown in Fig. 2). Fig. 2 also shows parameters representing the material and material flow at and between these stages, such as parameters v representing respective material flow rates between the process stages and s representing amounts of material at the process stages. These parameters are linked to each other according to the low-level simulation model illustrated in Fig. 2, so that for example the material flow rates are matched with respective changes in the amounts of material per time interval.

Next, a particular implementation of the method according to an aspect of the present disclosure is described.

Therein, the objective function is $c^Tx$, subject to boundary conditions $Ax = b$, as described further above. c, x are vectors of length n, b is a vector of length m, and A is an m×n matrix. Thus, the optimization problem of Eq. (1) above, including a consideration of the predictions F, can then be stated as the coupled problem

$$\min c^T x \quad \text{over } x \in \mathbb{R}^n \qquad (2)$$
$$\text{subject to} \quad Ax = b,$$
$$x \geq 0,$$
$$x_i \in \{0,1\} \text{ for } i \in I,$$
$$(A, b, c) = f(x).$$

which can be written in slightly shorter form as

$$\min f_c^T(x)x \quad \text{over } x \in \mathbb{R}^n \qquad (3)$$
$$\text{subject to} \quad f_A(x)x = f_b(x),$$
$$x \geq 0,$$
$$x_i \in \{0,1\} \text{ for } i \in I.$$

This problem is a large-scale nonlinear non-smooth mixed-integer problem for which no solution methods exist. We propose to use an optimization heuristic in which one optimizes alternately over two subsets of variables until no further progress can be achieved. A goal would be to find a partitioning of the variables into two sets, such that each optimization step over only one subset of variables carries enough mathematical structure to allow for practical solution algorithms. For the background on a possible solution abbreviated as ADM, we refer the reader to S. Göttlich, F. M. Hante, A. Potschka and L. Schewe. Penalty alternating direction methods for mixed-integer optimal control with combinatorial constraints (2019). ArXiv:1905.13554.

However, the variables in problems (2) and (3) do not lend themselves readily to such partitioning. We therefore perform two more steps of reformulation: In the first step, we introduce additional variables without changing the solution to the problem. In the second step, we relax certain constraints by an l1-penalty approach.

The first step may be understood as lifting to higher dimensions. In the first step, we introduce a copy $\tilde{x}$ of the decision variables x and a copy $\tilde{b}$ of the MILP input data b. We can then write down the equivalent problem formulation

$$\min f_c^T(\tilde{x})x \quad \text{over } x, \tilde{x} \in \mathbb{R}^n, \tilde{b} \in \mathbb{R}^m \qquad (4)$$
$$\text{subject to} \quad f_A(\tilde{x})x = \tilde{b},$$
$$x \geq 0,$$
$$x_i \in \{0,1\} \text{ for } i \in I,$$
$$\tilde{b} = f_b(\tilde{x}),$$
$$\tilde{x} = x.$$

In the context of the present disclosure, the introduced additional variables $\tilde{x}, \tilde{b}$ are also called proxy parameters. In particular, $\tilde{x}$ is termed a proxy process parameter and $\tilde{b}$ a proxy model parameter. The introduction of the additional variables makes it possible to arrive at a useful formulation after the second step.

The second step may be understood as decoupling via a l1 penalty. We can now drop the last two constraints in (4) and enforce them only weakly via l1 penalty terms in the objective function. We choose the l1 norm, because it gives rise to an exact penalty function that is piecewise differentiable and because it can be modelled exactly with MILP techniques.

With some sufficiently large penalty parameter $\rho > 0$, the resulting problem reads

$$\min f_c^T(\tilde{x})x + \rho\|x - \tilde{x}\|_1 + \rho\|\tilde{b} - f_b(\tilde{x})\|_1 \qquad (5)$$

$$\text{over} \qquad x, \tilde{x} \in \mathbb{R}^n, \tilde{b} \in \mathbb{R}^m,$$

$$\text{subject to} \qquad f_A(\tilde{x})x = \tilde{b},$$

$$x \geq 0,$$

$$x_i \in \{0, 1\} \text{ for } i \in I.$$

With this formulation, it is now possible to alternately optimize over x and over $(\tilde{x}, \tilde{b})$. For optimization in the direction of x, problem (5) is again a MILP and can be solved practically with MILP technology. In particular, the problem can be solved using the existing optimization code for problem (1), which only needs to be augmented by including the penalty term $\rho\|x - \tilde{x}\|_1$ in its objective function. The remaining term $\rho\|\tilde{b} - f_b(\tilde{x})\|_1$ in the penalty function of problem (5) does not depend on $x$.

For the optimization with respect to $(\tilde{x}, \tilde{b})$, it can be beneficial to eliminate b = $f_a(\tilde{x})x$ to arrive at the unconstrained continuous non-smooth nonlinear optimization problem

$$\min f_c^T(\tilde{x})x + \rho\|x - \tilde{x}\|_1 + \rho\|f_A(\tilde{x})x - f_b(\tilde{x})\|_1 \qquad (6)$$

$$\text{over} \qquad \tilde{x} \in \mathbb{R}^n.$$

The introduction of $\tilde{b}$ in problem (4) is necessary for arriving at an unconstrained problem in (6). To arrive at a continuous problem in (6), it is important that integrality is only enforced on the $x$ variables in problem (4) but not on the $\tilde{x}$ variables.

However, the prediction and aggregation functions $f(x) = a(F(x))$ must be able to produce meaningful results also for fractional realizations $\tilde{x}_i \in [0, 1]$ of the binary variables $x_i, i \in I$. The problem (6) might be unbounded from below for small $\rho$. The method may include carrying over bounds on the decision variables also to (6) and, particularly, using projected gradient descent.

Regarding solution methods for problem (6), the evaluation of the objective functions will be a concatenation of piecewise differentiable elemental functions, similar to the evaluation of Deep Neural Nets for example with ReLU units.

The method may include using the adjoint mode of algorithmic differentiation to compute at least one element of the subgradient of the objective function in problem (6). An element of the subgradient may thus be efficiently computed in less than for example five times the computational work required for a simple evaluation of the objective function. As additional benefits, this "automatic differentiation of the code" is usually much faster and much less error-prone than tedious symbolic differentiation by hand. Using the adjoint mode of Algorithmic Differentiation would be called back propagation in the terminology of Deep Learning.

The method may include using Deep Learning libraries like for example PyTorch for augmenting existing simulation codes (including, but not limited to, discrete-event simulation codes) with adjoint differentiation capabilities. Computed gradients could then be used in appropriate variants of steepest descent algorithms.

The method may include solving the problem (5) via a penalty alternating directions method (ADM) as described herein, particularly with ε-optimality, more particularly with partial ε-optimality. The penalty ADM is stated below for problem (5), using the variables introduced above. For the penalty ADM, we abbreviate

$$y = (\tilde{x}, \tilde{b}) \text{ and } Y = \mathbb{R}^n \times \mathbb{R}^m.$$

We denote the objective function of problem (5) by

$$\Psi = (x, y) := f_c^T(\tilde{x})x + \rho\|x - \tilde{x}\|_1 + \rho\|\tilde{b} - f_b(\tilde{x})\|_1$$

and its feasible set for $x$ by

$$X = \{x \in \mathbb{R}^n | f_A(\tilde{x})x = \tilde{b}, x \geq 0, x_i \in \{0, 1\}, i \in I\}.$$

A penalty ADM of solving problem (5) may be expressed as an algorithm as follows.

8

<u>Algorithm 1</u>

Choose $\left(x^{(0,*)}, y^{(0,*)}\right) \in X \times Y$ and $\rho^{(1)} > 0$

**for** $k = 1, 2, 3 \ldots$ **do**

$\qquad$ Set $\left(x^{(k,0)}, y^{(k,0)}\right) = \left(x^{(k-1,*)}, y^{(k-1,*)}\right)$

$\qquad$ **for** $l = 0, 1, 2, \ldots$ **do**

$\qquad\qquad$ For $y^{(k,l)}$ fixed, find $\frac{\varepsilon}{2}$-optimal solution $x^{(k,l+1)} \in X$ of (5), using a MILP solver

$\qquad\qquad$ **if** $\Psi\left(x^{(k,l+1)}, y^{(k,l)}\right) \geq \Psi\left(x^{(k,l)}, y^{(k,l)}\right) - \frac{\varepsilon}{2}$ **then**

$\qquad\qquad\qquad$ Set $\left(x^{(k,*)}, y^{(k,*)}\right) = \left(x^{(k,l+1)}, y^{(k,l)}\right)$

$\qquad\qquad\qquad$ **break**

$\qquad\qquad$ **end if**

$\qquad\qquad$ For $x^{(k,l+1)}$ fixed, find $\frac{\varepsilon}{2}$-optimal solution $y^{(k,l+1)} \in Y$ of (6)

$\qquad\qquad$ **if** $\Psi\left(x^{(k,l+1)}, y^{(k,l+1)}\right) \geq \Psi\left(x^{(k,l+1)}, y^{(k,l)}\right) - \frac{\varepsilon}{2}$ **then**

$\qquad\qquad\qquad$ Set $\left(x^{(k,*)}, y^{(k,*)}\right) = \left(x^{(k,l)}, y^{(k,l)}\right)$

$\qquad\qquad\qquad$ **break**

$\qquad\qquad$ **end if**

$\qquad$ **end for**

$\qquad$ Choose $\rho^{(k+1)} > \rho^{(k)}$

**end for**

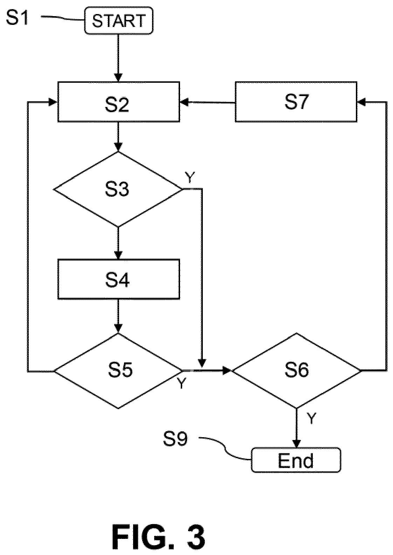

Fig. 3 is a chart illustrating a method of material flow optimization according to aspects of the present disclosure. In particular, the chart is a qualitative flowsheet representation of Algorithm 1 discussed above. The method starts in block S1. The method includes, in block S2, optimizing the objective function of problem (5) with respect to x, particularly via a MILP code.

The method includes, in block S3, evaluating if a partially optimal solution has been found. If the answer is yes, the method proceeds to block S6, where the decision if the method should be terminated is made. Otherwise, the method proceeds in block S4, where the objective function of problem (5) is optimized with respect to $(\tilde{x}, \tilde{b})$, particularly using algorithmic differentiation.

The method includes, in block S5, a further evaluation if a partially optimal solution has been found. If the answer is yes, the method proceeds to block S6, where the decision if the method should be terminated is made. Otherwise, the method goes back to block S2, where the objective function is evaluated again with respect to x. If no partially optimal solution is found in blocks S3 or S5, the method keeps proceeding in an inner loop, alternating between an optimization with respect to x and an optimization with respect to $(\tilde{x}, \tilde{b})$.

If in block S6 no decision is made to terminate the method, it proceeds to block S7, where the penalty parameter $\rho$ is increased. Block S7 is part of an outer loop for increasing the penalty. From block S7, the method returns to block S2, where the objective function is evaluated again with respect to x. If in block S6 the decision is made to terminate, the method proceeds to block S9, where it ends.

The present disclosure further relates to an integrated optimizing system for material flow optimization in an industrial process. The integrated optimizing system includes a high-level optimizer module describing the material flow by coarse high-level process parameters x and including an optimization program for the high-level process parameters x. The optimization program includes an objective function subject to constraints and being dependent on high-level model parameters A, b, c.

The integrated optimizing system further includes a low-level simulation module for simulating the material flow, the low-level simulation module including a low-level simulation function adapted for obtaining detailed low-level material flow data F based on the high-level process parameters x. In particular, the low-level material flow data is consistent with the high-level process parameters x. The low-level simulation module may additionally include a low-level optimization.

The integrated optimizing system further includes an aggregator module including an aggregator function adapted for calculating the high-level model parameters A, b, c based on the low-level material flow data F. The integrated optimizing system is configured for carrying out a method according to aspects described herein.

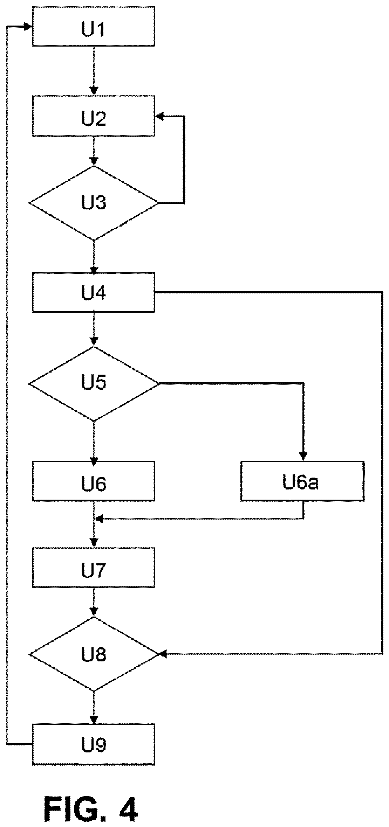

Fig. 4 is a chart illustrating a method of material flow optimization according to aspects of the present disclosure. The integrated optimizing system may include a user interface.

The method starts in block U1. The method may include, in block U2, presenting a current state of the mine. The method may include, in block U3, a determination if a process evaluation or correction is needed. If the answer is no, the method returns to block U2. Otherwise, the method proceeds with block U4, where a user, e.g. an operator, may choose among preconfigured or manually configured simulations or optimizations. In the following, references to the term "operator" can also be understood as referring to the term "user".

In particular, the method may include: selecting, by an operator, a scenario from a plurality of predetermined scenarios presented by the user interface. Each of the predetermined scenarios include definitions of a plurality of model parameters belonging to the respective scenario. The method may include using the model parameters for the material flow optimization.

When the operator chooses one of the scenarios, the integrated optimizing system may execute the predefined configuration and present the results in one or more predefined configuration views. The predetermined scenarios may be fixed or configurable. As an example, the operator may choose a speed reduction of e.g. 10 % for vehicles in a production area. In this example, all vehicles would automatically be configured with a 10 % lower speed and the scenario would be simulated, particularly optimized according to aspects described herein.

The method may include, in block U5, determining if a precalculated simulation for a chosen scenario is available. The precalculated simulation data may be provided for example from a remote storage location, particularly from an Internet server. If no precalculated data are available, method may proceed to block U6a, where data a generated, for example via an optimization method as disclosed herein. From block U6a as well as from block U5, the method proceeds to block U7, where the results, e.g. simulation results, are presented to the operator.

The method may further include: selecting, by an operator, a filter from a plurality of predetermined filters presented by the user interface, and using the selected filter for filtering the output of the material flow optimization.

The method may further include presenting, by the user interface, an advice proposing one or more preferred, particularly recommended, actions based on the material flow optimization. For example, the proposed actions may be based on key performance indicators (KPIs) for production.

From block U7, the method proceeds to block U8, where it is determined if a configuration based on the results presented in block U7, e.g. the simulation results, can be used in conjunction with the presently needed operation. If the answer is yes, the method proceeds to block U9, where the configuration is applied in operation. The method then returns to the start in block U1.

Generally, operators controlling an industrial process need to be able to monitor the process and to take preventive actions. To support this work efficiently an advisory solution can be used. A simulation engine is used to simulate the industrial process using a model including the process steps of interest. The results may be displayed for the operator on the user interface who can immediately act or for example test and compare different scenarios.

Operators frequently want to compare the same scenarios, i.e. a limited number of different scenarios. With predetermined user interfaces, particularly predefined human-machine interfaces (HMIs), and configurations according to the present disclosure, a particularly fast and easy interaction of the operator with the system may be achieved. Repeatable solutions may be provided to operators. In particular, the results are presented in a clear and consistent format. Output may be particularly easy to interpret, such that the operator receives advice which can be used immediately.

When simulating different scenarios, it is cumbersome to change all variables that affect the process and particularly to evaluate all changes occurring to the output variables. Repeatedly simulating different scenarios, particularly in a systematic way and many times per shift, may pose certain challenges. For example, the operator may be monitoring a process, e.g. a mining material flow process. During normal operation, the operator wants to evaluate the sensitivity of the plant to make sure that the process is kept within limits. If a problem, unplanned event or deviation is observed, the operator may be under stress and needs to decide fast to get the process back on track. Operators typically have to perform fast evaluations of the process status periodically and / or under stress.

User interfaces according aspects of the present disclosure may include at least one of a first, second, or third interface. The first interface in particularly an input interface with at least one predefined or configurable scenario. The second interface is particularly an output interface where the most relevant output results are presented, with one or more configurable filter alternative. The third interface is particularly an advisory interface where advice to the operator may be presented. The operator can execute at least one input scenario and view an output result in a "filtered" predefined format, view the advice presented, or both. Accordingly, the operator receives fast updates on the sensitivity or impact of the process and can take relevant decision fast.

<u>Formulation of a minimum viable scenario</u>

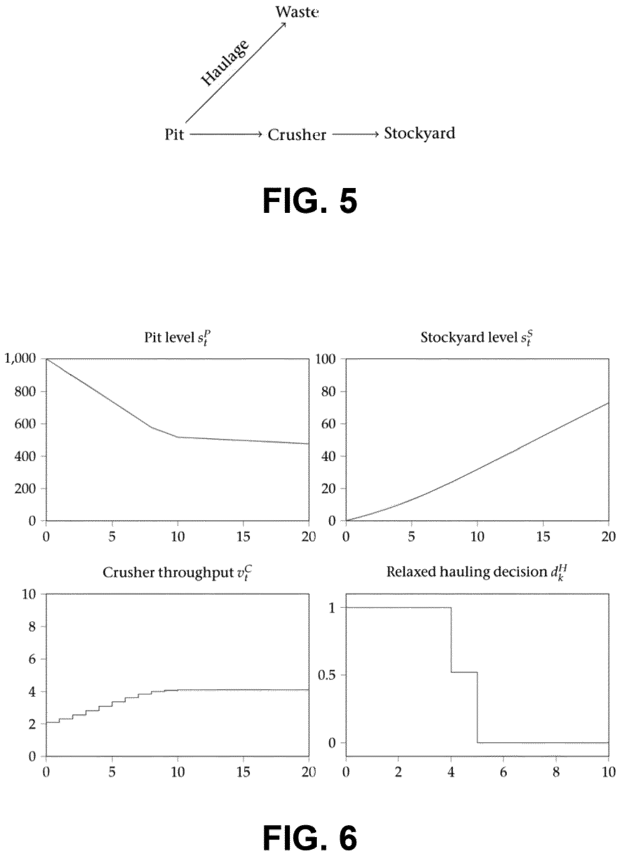

To address the main challenges of the coupling of a simulation module, like for example DESim, with a mixed-integer optimizer using a penalty alternating directions method (PADM), a simplified problem statement without the direct use of DESim can be employed. To still address the issues of combining mixed-integer decisions, nonlinearities, and attribute tracking, an exemplary minimum viable scenario is provided below. A schematic illustration of the industrial process being modeled is depicted in Fig. 5. A crusher can directly pick up material from a pit, process it, and deposit it to a stockyard. The material in the pit has an attribute that influences the crushing process. The initial material incurs higher processing $CO_2$ emissions in the crusher. Haulage trucks can be used to transport material with higher processing emissions to the waste dump to lower the $CO_2$ emissions. The deployment of trucks is a binary decision for each shift (yes/no), which lives on a coarser time discretization than the continuous crusher throughput control. The objective is to maximize the amount of material at the stockyard at the end of the considered time horizon while keeping the $CO_2$ emissions below a given threshold.

To settle our notation, we use a discrete-time model on an equidistant time-grid $t = 0, \cdots, 20 =: n$ with a coarser supergrid that combines $m = 2$ intervals into one interval (assuming that m is a divisor of n). The storage levels are denoted by $s_t^P$, $s_t^S$, $s_t^W$ for the pit, stockyard, and waste dump, respectively. The binary haulage decision is $d_k^H \in \{0, 1\}$ with $k = \lfloor t/2 \rfloor$. The haulage throughput is $v^H = 50$ and the crusher throughput is $v_t^C$, subject to the lower bound 0 and the upper bound 10. As initial conditions, we assume $s_0^P = 1000$, $s_0^S = 0$, $s_0^W = 0$. The upper bound on the crusher $CO_2$ emissions $e^C$ is $e^{max} = 150$.

For the sake of simplicity, we disregard the $CO_2$ emissions of the truck haulage. The crusher $CO_2$ emissions are assumed to depend quadratically on the crusher throughput with a factor that depends on the material attribute $\sigma$. Furthermore, we assume that the material attribute is shaped as a parabola depending only on the storage level of the pit according to

$$\sigma(s_t^P) = \frac{1}{2} + 2\left(\frac{s_t^P}{1000} - \frac{1}{2}\right)^2,$$

which means that $\sigma(s_0^S) = \sigma(0) = 1$ and attains its minimum when the pit has been half emptied $\sigma(500) = \frac{1}{2}$.

Together with the linear dynamics and the emission formula, the resulting Mixed-Integer linear Program (MINLP) reads as

$$\min -s_n^S$$
$$\text{s.t.} \; s_{t+1}^P = s_t^P - v_t^C - v^H d_{\lfloor t/m \rfloor}^H,$$
$$s_{t+1}^S = s_t^S + v_t^C,$$
$$s_{t+1}^W = s_t^W + v^H d_{\lfloor t/m \rfloor}^H,$$
$$s^P = 1000,$$
$$s^S = 0,$$
$$s^W = 0, \tag{1}$$
$$e^C = \sum_{t=0}^{n-1} \sigma(s_t^P) \cdot (v_t^C)^2,$$
$$e^C \le e^{\max},$$
$$0 \le v_t^C \le 10,$$
$$d_t^H \in \{0,1\},$$

where t runs from 0 to $n$ - 1 in the dynamics.

To get an idea of the optimal solution, we relax the integer constraint to $d_t^H \in [0, 1]$ and use the software library Ipopt to solve the resulting NLP set up with the software framework CasADi. The resulting solution is depicted in Fig. 6. We can observe that the optimal relaxed hauling decision $d_k^H$ is already almost integer except for $k = 4$, which would probably have to be rounded up or down and fed back to reoptimize (1) over the continuous controls $v_t^C$ only to obtain an optimal solution. It is apparently optimal to move away much of the initial CO2-intensive material to the waste dump and then mainly process the material that lies around the level $s_t^P = 500$ where the CO2 emissions for processing are minimal.

For this simplified scenario, it turned out to be easier to use CasADi for the computation of derivatives and the coupling to the NLP solver Ipopt. Previously, we had suggested that a gradient-type method should be used to solve the resulting non-smooth unconstrained problem, which is possible in principle, but no reliable off-the-shelf solver is currently available.

Penalty Alternating Directions Method

For the application of PADM, we first reformulate problem (I) in the variables $x = (s^P, s^S, s^W, v^C, d^H, e^C)$, which implies that the objective is already of linear form $c^T x$ for a suitably chosen vector c and the linear dynamics and initial values can be cast in a linear constraint $Ax = b$ for some matrix $A$ and right-hand side $b$.

The remaining application of PADM consists in a number of equivalent reformulations that are seemingly making the problem formulation more complex, but allow for a penalty decomposition later.

Equivalent reformulations

The first reformulation addresses the nonlinearities in the CO2 emissions constraint

$$E(x) := \sum_{t=0}^{n-1} \sigma(s_t^P) \cdot (v_t^C)^2 \le e^{\max}.$$

Here, we linearize $E(x)$ around some given point $\tilde{x}$, which yields

$$E_{\tilde{x}}^{\text{lin}}(x) := E(\tilde{x}) + \nabla E(\tilde{x})^T (x - \tilde{x})$$

and

$$E(x) = E_{\tilde{x}}^{\text{lin}}(x) + o(\|x - \tilde{x}\|).$$

Obviously, we obtain $E_x^{\text{lin}} = E(x)$ if we linearize at $\tilde{x} = x$ and we can equivalently use the constraint $E_x^{\text{lin}}(x) \le e^{\max}$ instead of $E(x) \le e^{\max}$ in (1). This linearization will later happen in the aggregator, which generates the input data to the MILP optimizer. Together, we arrive at the equivalent problem

$$\min_x c^T x$$
$$\text{s.t. } Ax = b,$$
$$e^C = E(x) + \nabla E(x)^T (x - x),$$
$$e^C \leq e^{\max},$$
$$0 \leq v_f^C \leq 10,$$
$$d_f^H \in \{0, 1\}.$$

(2)

The second equivalent reformulation duplicates the degrees of freedom $x$ to

$$\tilde{x} = (\tilde{s}^P, \tilde{s}^S, \tilde{s}^W, \tilde{v}^C, \tilde{d}^H, \tilde{e}^C)$$

only to enforce they are the same by the constraint $x - \tilde{x} = 0$. This allows us to judiciously choose from which set of variables we pick the arguments of the occurring functions. The choice

$$e^C = E(\tilde{x}) + \nabla E(\tilde{x})^T (x - \tilde{x}),$$

is beneficial for the CO2 emission constraint. Together, we arrive at the equivalent problem

$$\min_{x, \tilde{x}} c^T x$$
$$\text{s.t. } Ax = b,$$
$$e^C - \nabla E(\tilde{x})^T x = E(\tilde{x}) - \nabla E(\tilde{x})^T \tilde{x},$$
$$e^C \leq e^{\max},$$
$$0 \leq v_f^C \leq 10,$$
$$d_f^H \in \{0, 1\},$$
$$x - \tilde{x} = 0.$$

(3)

The third equivalent reformulation introduces another constrained variable

$$\tilde{b} = E(\tilde{x}) - \nabla E(\tilde{x})^T \tilde{x}$$

and we end up with

$$\min_{x, y} c^T x$$
$$\text{s.t. } Ax = b,$$
$$e^C - \nabla E(\tilde{x})^T x = \tilde{b},$$
$$e^C \leq e^{\max},$$
$$0 \leq v_f^C \leq 10,$$
$$d_f^H \in \{0, 1\},$$
$$x - \tilde{x} = 0,$$
$$E(\tilde{x}) - \nabla E(\tilde{x})^T \tilde{x} - \tilde{b} = 0,$$

(4)

where we use $y = (\tilde{x}, \tilde{b})$.

Penalty decoupling

We now relax problem (4) by enforcing the last two constraints only weakly by an l1-penalty term weighted with the penalty parameter $\rho \geq 0$, which leads to

$$\min_{x,y} c^T x + \rho \|x - \tilde{x}\|_1 + \rho \left\| E(\tilde{x}) - \nabla E(\tilde{x})^T \tilde{x} - \tilde{b} \right\|_1$$
$$\text{s.t. } Ax = b,$$
$$e^C - \nabla E(\tilde{x})^T x = \tilde{b},$$
$$e^C \leq e^{\max},$$
$$0 \leq v_t^C \leq 10,$$
$$d_t^H \in \{0,1\}. \tag{5}$$

The crucial observation now is that we obtain a substantial amount of mathematical structure if we alternately optimize over $x$ and $y$.

**Optimize over $x$.** If we fix $y$ and optimize over $x$, we obtain an MILP (the l1-term $\|x - \tilde{x}\|_1$ can be reformulated using slacks and the second l1-term is just a constant). This problem can be solved efficiently with established linear programming technology as provided, e.g., by optimization solver Gurobi.

**Optimize over $y$.** If we fix $x$ and optimize over $y$, we can eliminate $\tilde{b}$ to arrive at the unconstrained non-smooth optimization problem

$$\min_{\tilde{x}} c^T x + \rho \|x - \tilde{x}\|_1 + \rho \left\| E(\tilde{x}) - e^C + \nabla E(\tilde{x})^T (x - \tilde{x}) \right\|_1. \tag{6}$$

This problem can be solved with methods based on gradient descent or reformulated into an NLP using slack variables.

It is important to note here that in case there are more than one nonlinear constraints, e.g., due to nonlinearities in the dynamics, the dimension of $\tilde{b}$ would increase to, say, $p \in \mathbb{N}$. Reformulating (6) with slacks would require the evaluation of $p$ gradients with $p$ backward AD sweeps, while a (sub)gradient of the objective function of (6) could still be obtained by just one backward AD sweep.

As a side remark, we can also add the constraints

$$0 \leq v_t^C \leq 10 \text{ and } 0 \leq d_t^H \leq 1$$

in problems (3) - (6), which preserves the equivalence of the reformulations, but adds box constraints to some of the variables in (6), which could be handled with projected gradient methods.

Partial minima are not guaranteed to be optimal

In general, optimizing in alternating directions does not guarantee convergence to an optimum of (5). In fact, the algorithm can get stuck in points where no improvement is possible in either direction by itself. These points are called partial minima and they indeed occur, as we see below.

Implicit and explicit variables

The general PADM framework delivers a substantial amount of freedom on how to choose E(x), because the variables $x$ can be split into explicit variables $v^C$ and $d^H$ and implicit variables, which are fully determined by the explicit variables through the process dynamics and initial values. Thus, it is in principle possible to not use the implicit variables as degrees of freedom in the optimization problems (1) - (4). This choice has a drastic effect on problem (6). In the above derivation, we do not have to resort to the simulator at all for the optimization of (6), while if we drop the implicit variables, the evaluation of $E$ and $\nabla E$ requires a forward simulation sweep and already a first order derivative. Descent methods based on gradients would either have to resort to higher order derivatives (which is difficult in PyTorch) or to hand-written expressions for $\nabla E$.

Simulator, aggregator, and optimizer

The role of DESim is now substituted with a simple forward sweep through the dynamics and the CO2 emissions. Its inputs are the crusher throughput $v_t^C$ and the hauling decisions $d_k^H$.

The aggregator linearizes $E(x)$ at $\tilde{x}$, which provides the input matrix and vector data to the MILP optimizer. It is repeatedly called and needs to be differentiated for the optimization with respect to $y = (\tilde{x}, \tilde{b})$.

The MILP optimizer optimizes over $x$ and ensures integer feasibility of the solution.

Numerical results

We use a simplified PADM method with an outer loop and an inner loop. In the outer loop, we increase the penalty parameter $\rho$ from 0.1 to 1,000 in multiples of 10. In the inner loop, we just do three rounds of alternately optimizing over $y$ and then $x$. More refined flow control and termination criteria are possible (see S. Göttlich, F. M. Hante, A. Potschka and L. Schewe. Penalty alternating direction methods for mixed-integer optimal control with combinatorial constraints (2019). ArXiv:1905.13554) but were not implemented here.

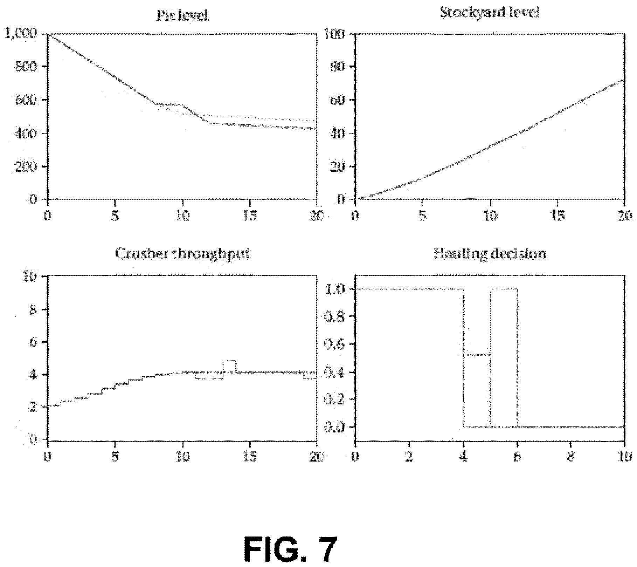

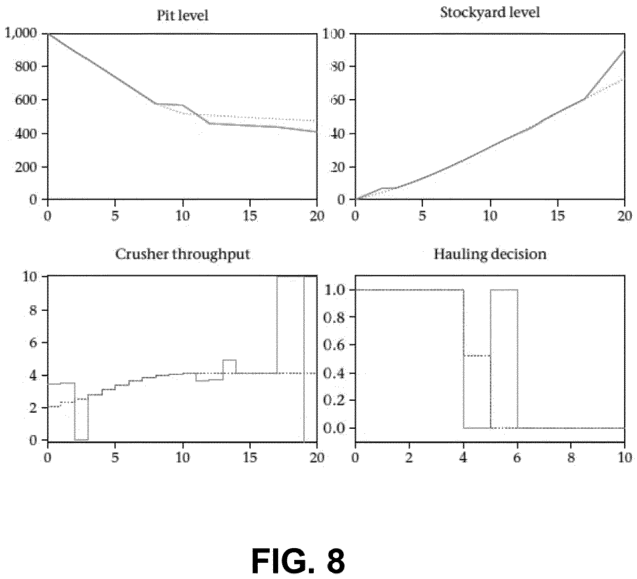

As an initial guess, we used the relaxed solution depicted in Fig. 6 and perturbed $v^C$ by scaling it with a value of $\alpha_0 \in (0, 1)$. The result of the PADM approach for the choices of $\alpha_0 = 0.91$ and $\alpha_0 = 0.90$ are depicted in Figs. 7 and 8, respectively.

In particular, Fig. 7 shows the PADM result for an initial guess generated from the relaxed solution (dotted red) with scaling $\alpha_0 = 0.91$. The NLP solution is displayed in solid orange, the MILP solution in solid blue. The value of $e^C$ (not shown) converges to $e^{max}$. Fig. 8 shows the PADM result for an initial guess generated from the relaxed solution (dotted red) with scaling $\alpha_0 = 0.90$. The NLP solution is displayed in solid orange, the MILP solution in solid blue. The final value of $e^C$ (not shown) is 287,4, which is much greater than $e^{max}$.

While both approaches satisfy integrality of $d^H$, the one started with $\alpha_0 = 0.91$ also satisfies the nonlinear CO2 emission constraint. When started from an initial guess generated with $\alpha_0 = 0.90$, the PADM does not converge to a partial minimum that satisfies the CO2 emission constraint. In fact, it is largely violated and the two controls $v_n^H$ and $\widetilde{v}_n^H$ do not coincide on the last interval.

The method according to the present invention is applicable to a material flow, especially the flow of a bulk material which is represented as a continuous flow. This includes, in particular, material extraction and material processing industries, and especially particular continuous material extraction and continuous material processing. Examples are mining, paper and pulp, metals processing, polymer processing, and chemical processing of materials. Further examples are cement, food, or beverage processing, as well as transportation processes, particularly including the charging of electric vehicles.

**Claims**

1. Method of material flow optimization in an industrial process by using an integrated optimizing system, wherein the material flow is a flow of a bulk material in a continuous material extraction process or continuous material processing process;

   the integrated optimizing system comprising:

   - a high-level optimizer module (10) describing the material flow by coarse high-level process parameters (x) and including an optimization program for the high-level process parameters (x), the optimization program being dependent on high-level model parameters (A, b, c) and including an objective function subject to constraints;
   - a low-level simulation module (30) for simulating the material flow, the low-level simulation module (30) including a low-level simulation function adapted for obtaining detailed low-level material flow data (F) based on the high-level process parameters (x); and
   - an aggregator module (40) including an aggregator function adapted for calculating the high-level model parameters (A, b, c) based on the low-level material flow data (F),

   the method comprising approaching an optimum value of the objective function by iteratively modifying the high-level process parameters (x), wherein an iteration includes:

   a) carrying out, by the low-level simulation module (30), a low-level simulation thereby obtaining the detailed low-level material flow data (F); wherein

   the low-level simulation is carried out based on high-level process parameters being proxy process parameters ($\bar{x}$) iteratively approaching the high-level process parameters (x), wherein the proxy process parameters ($\bar{x}$) are further input parameters of the optimization program, and wherein the objective function includes a proxy process parameter penalty term penalizing a deviation between the proxy process parameters ($\bar{x}$) and the high-level process parameters (x);

b) aggregating, by the aggregator module (40), the low-level material flow data (F) thereby calculating, from the low-level material flow data (F), aggregated high-level model parameters ($f_A$, $f_b$, $f_c$); and
c) inputting the aggregated high-level model parameters ($f_A$, $f_b$, $f_c$) into the optimization program; wherein

the system comprises a user interface, and the method comprises
selecting, by the operator, a scenario from a plurality of predetermined scenarios presented by the user interface, wherein each of the predetermined scenarios comprise definitions of a plurality of model parameters belonging to the respective scenario, and using the model parameters for the material flow optimization.

2. Method of material flow optimization according to claim 1, wherein the low-level simulation is carried out based on high-level process parameters being

- process parameters (x) obtained in a previous iteration.

3. Method of material flow optimization according to any one of the preceding claims, wherein the low-level simulation includes a nonlinear model for the process parameters (x).

4. Method of material flow optimization according to any one of the preceding claims, wherein
the aggregator function maps the low-level material flow data (F) onto high-level model parameters ($f_A$, $f_b$, $f_c$).

5. Method of material flow optimization according to any one of the preceding claims, wherein

the optimization program uses, as the high-level model parameters (A, b, c), respective parameters selected from the following:

- the aggregated high-level model parameters ($f_A(\bar{x})$, $f_b(\bar{x})$, $f_c(\bar{x})$) obtained in step b), or
- proxy model parameters ($\tilde{A}, \tilde{b}, \tilde{c}$) iteratively approaching the aggregated high-level model parameters ($f_A$, $f_b$, $f_c$), wherein

the proxy model parameters ($\tilde{A}, \tilde{b}, \tilde{c}$) are further input parameters of the optimization program, and wherein the objective function includes a proxy model parameter penalty term penalizing a deviation between the proxy model parameters ($\tilde{A}, \tilde{b}, \tilde{c}$) and the high-level model parameters ($f_A$, $f_b$, $f_c$).

6. Method of material flow optimization according to any one of the preceding claims, wherein the objective function is a function

$$c^T x \qquad\qquad\qquad (1),$$

$$\text{subject to boundary conditions } Ax = b \qquad\qquad (2),$$

wherein c, x are vectors of length n, b is a vector of length m, and A is an m$\times$n matrix.

7. Method of material flow optimization according to claim 6, wherein

the optimization program uses, as the high-level model parameters A and c in expressions (1), (2) the aggregated high-level model parameters ($f_A(\bar{x})$, $f_c(\bar{x})$) obtained in step b), and/or
the optimization program uses, as the high-level model parameter b in expression (2), a proxy model parameter $\tilde{b}$ iteratively approaching the aggregated high-level model parameter ($f_b$).

8. Method of material flow optimization according to any one of the preceding claims, wherein an iteration of the method includes

a) carrying out the low-level simulation based on the high-level process parameters (x) obtained by the previous high-level optimization, thereby obtaining the low-level material flow data (F); and
c) carrying out a high-level optimization based on the aggregated high-level model parameters ($f_A$, $f_b$, $f_c$) obtained by aggregating the low-level material flow data (F) obtained by the previous low-level simulation, thereby obtaining the high-level process parameters (x).

9. Method of material flow optimization according to any one of the preceding claims, wherein

the output of the low-level simulation module (30) is used as input to the aggregator module (40), which outputs the high-level model parameters to be used in the high-level optimizer module (10) as an input for the optimization; and wherein
the output of the high-level optimizer module (10) is then fed as an input to the low-level simulation module (30).

10. Method of material flow optimization according to any one of the preceding claims, wherein
the proxy process parameter penalty term and/or the proxy model parameter penalty term contains a penalty multiplier $\rho$, and wherein
the method comprises:

i) defining a penalty multiplier $\rho$;
ii) an inner iterative loop in which the optimum value of the objective function is approached by a high-level optimization code iteratively modifying the high-level process parameters (x); and
iii) an outer iterative loop in which the penalty multiplier $\rho$ is modified depending on an optimizing criterion for the inner loop.

11. Method of material flow optimization according to any one of the preceding claims, wherein the method comprises

- selecting, by the operator, a filter from a plurality of predetermined filters presented by the user interface, and using the selected filter for filtering the output of the material flow optimization; and
- presenting, by the user interface, an advice proposing one or more preferred actions based on the material flow optimization.

12. Integrated optimizing system for material flow optimization in an industrial process, wherein the material flow is a flow of a bulk material in a continuous material extraction process or continuous material processing process, the integrated optimizing system comprising:

- a high-level optimizer module (10) describing the material flow by coarse high-level process parameters (x) and including an optimization program for the high-level process parameters (x), the optimization program including an objective function subject to constraints and being dependent on high-level model parameters (A, b, c);
- a low-level simulation module (30) for simulating the material flow, the low-level simulation module (30) including a low-level simulation function adapted for obtaining detailed low-level material flow data (F) based on the high-level process parameters (x); wherein

the low-level simulation is carried out based on high-level process parameters being proxy process parameters ($\bar{x}$) iteratively approaching the high-level process parameters (x), wherein
the proxy process parameters ($\bar{x}$) are further input parameters of the optimization program, and wherein
the objective function includes a proxy process parameter penalty term penalizing a deviation between the proxy process parameters ($\bar{x}$) and the high-level process parameters (x);

- an aggregator module (40) including an aggregator function adapted for calculating the high-level model parameters (A, b, c) based on the low-level material flow data (F); and
- the user interface;

wherein the integrated optimizing system is configured for carrying out the method according to any one of the preceding claims.

**Patentansprüche**

1. Verfahren zur Materialflussoptimierung in einem industriellen Prozess durch Verwenden eines integrierten Optimierungssystems, wobei der Materialfluss ein Fluss eines Schüttguts in einem kontinuierlichen Materialextraktionsprozess oder einem kontinuierlichen Materialverarbeitungsprozess ist;

wobei das integrierte Optimierungssystem umfasst:

- ein Optimierungsmodul hoher Ebene (10), das den Materialfluss durch grobe Prozessparameter hoher Ebene (x) beschreibt und ein Optimierungsprogramm für die Prozessparameter hoher Ebene (x) aufweist, wobei das Optimierungsprogramm von Modellparametern hoher Ebene (A, b, c) abhängt und eine Einschränkungen unterliegende Zielfunktion umfasst;
- ein Simulationsmodul niedriger Ebene (30) zum Simulieren des Materialflusses, wobei das Simulationsmodul niedriger Ebene (30) eine Simulationsfunktion niedriger Ebene umfasst, die zum Erhalten detaillierter Materialflussdaten niedriger Ebene (F) basierend auf den Prozessparametern hoher Ebene (x) angepasst ist; und
- ein Aggregatormodul (40), das eine Aggregatorfunktion aufweist, die zum Berechnen der Modellparameter hoher Ebene (A, b, c) basierend auf den Materialflussdaten niedriger Ebene (F) angepasst ist, wobei das Verfahren ein Annähern an einen optimalen Wert der Zielfunktion durch iteratives Modifizieren der Prozessparameter hoher Ebene (x) umfasst, wobei eine Iteration aufweist:

a) Ausführen, durch das Simulationsmodul niedriger Ebene (30), einer Simulation niedriger Ebene, wodurch die detaillierten Materialflussdaten niedriger Ebene (F) erhalten werden; wobei

die Simulation niedriger Ebene basierend auf Prozessparametern hoher Ebene durchgeführt wird, die Proxy-Prozessparameter (x̃) sind, die sich iterativ an die Prozessparameter hoher Ebene (x) annähern, wobei
die Proxy-Prozessparameter (x̃) weitere Eingabeparameter des Optimierungsprogramms sind und wobei
die Zielfunktion einen Proxy-Prozessparameter-Strafterm aufweist, der eine Abweichung zwischen den Proxy-Prozessparametern (x̃) und den Prozessparametern hoher Ebene (x) bestraft;

b) Aggregieren, durch das Aggregatormodul (40), der Materialflussdaten niedriger Ebene (F), wodurch aus den Materialflussdaten niedriger Ebene (F) aggregierte Modellparameter hoher Ebene ($f_A$, $f_b$, $f_c$) berechnet werden; und
c) Eingeben der aggregierten Modellparameter hoher Ebene ($f_A$, $f_b$, $f_c$) in das Optimierungsprogramm; wobei das System eine Benutzerschnittstelle umfasst und das Verfahren umfasst

Auswählen, durch den Bediener, eines Szenarios aus einer Vielzahl vorbestimmter Szenarien, die durch die Benutzerschnittstelle präsentiert werden, wobei jedes der vorbestimmten Szenarien Definitionen einer Vielzahl von Modellparametern, die zum jeweiligen Szenario gehören, umfasst, und Verwenden der Modellparameter für die Materialflussoptimierung.

2. Verfahren zur Materialflussoptimierung nach Anspruch 1, wobei die Simulation niedriger Ebene basierend auf Prozessparametern hoher Ebene ausgeführt wird, bei denen es sich handelt um

- Prozessparameter (x), die in einer vorherigen Iteration erhalten wurden.

3. Verfahren zur Materialflussoptimierung nach einem der vorhergehenden Ansprüche, wobei die Simulation niedriger Ebene ein nichtlineares Modell für die Prozessparameter (x) einschließt.

4. Verfahren zur Materialflussoptimierung nach einem der vorhergehenden Ansprüche, wobei die Aggregatorfunktion die Materialflussdaten niedriger Ebene (F) auf Modellparameter hoher Ebene ($f_A$, $f_b$, $f_c$) abbildet.

5. Verfahren zur Materialflussoptimierung nach einem der vorhergehenden Ansprüche, wobei

das Optimierungsprogramm als die Modellparameter hoher Ebene (A, b, c) jeweilige Parameter verwendet, die aus den folgenden ausgewählt sind:

- den in Schritt b) erhaltenen aggregierten Modellparametern hoher Ebene ($f_A(x̃)$, $f_b(x̃)$, $f_c(x̃)$) oder
- Proxy-Modellparametern (Ã, b̃, c̃), die sich iterativ an die aggregierten Modellparameter hoher Ebene ($f_A$, $f_b$, $f_c$) annähern, wobei

die Proxy-Modellparameter ($\tilde{A}$, $\tilde{b}$, $\tilde{c}$) weitere Eingabeparameter des Optimierungsprogramms sind und wobei die Zielfunktion einen Proxy-Modellparameter-Strafterm einschließt, der eine Abweichung zwischen den Proxy-Modellparametern ($\tilde{A}$, $\tilde{b}$, $\tilde{c}$) und den Modellparametern hoher Ebene ($f_A$, $f_b$, $f_c$) bestraft.

6. Verfahren zur Materialflussoptimierung nach einem der vorhergehenden Ansprüche, wobei die Zielfunktion eine Funktion ist

$$c^T x \quad (1),$$

abhängig von Randbedingungen $Ax = b$ (2), wobei c, x Vektoren der Länge n sind, b ein Vektor der Länge m ist und A eine $m \times$ n-Matrix ist.

7. Verfahren zur Materialflussoptimierung nach Anspruch 6, wobei

   das Optimierungsprogramm als die Modellparameter hoher Ebene A und c in Ausdrücken (1), (2) die in Schritt b) erhaltenen aggregierten Modellparameter hoher Ebene ($f_A(\tilde{x})$, $f_c(\tilde{x})$) verwendet und/oder
   das Optimierungsprogramm als den Modellparameter hoher Ebene b in Ausdruck (2) einen Proxy-Modellparameter $\tilde{b}$, der sich iterativ an den aggregierten Modellparameter hoher Ebene ($f_b$) annähert, verwendet.

8. Verfahren zur Materialflussoptimierung nach einem der vorhergehenden Ansprüche, wobei eine Iteration des Verfahrens einschließt

   a) Ausführen der Simulation niedriger Ebene basierend auf den Prozessparametern hoher Ebene (x), die durch die vorherige Optimierung hoher Ebene erhalten werden, wodurch die Materialflussdaten niedriger Ebene (F) erhalten werden; und
   c) Ausführen einer Optimierung hoher Ebene basierend auf den aggregierten Modellparametern hoher Ebene ($f_A$, $f_b$, $f_c$), die durch Aggregieren der Materialflussdaten niedriger Ebene (F) erhalten werden, die durch die vorherige Simulation niedriger Ebene erhalten werden, wodurch die Prozessparameter hoher Ebene (x) erhalten werden.

9. Verfahren zur Materialflussoptimierung nach einem der vorhergehenden Ansprüche, wobei

   die Ausgabe des Simulationsmoduls niedriger Ebene (30) als Eingabe in das Aggregatormodul (40) verwendet wird, das die Modellparameter hoher Ebene, die in dem Optimierermodul hoher Ebene (10) zu verwenden sind, als eine Eingabe für die Optimierung ausgibt; und wobei
   die Ausgabe des Optimierermoduls hoher Ebene (10) dann als Eingabe dem Simulationsmodul niedriger Ebene (30) zugeführt wird.

10. Verfahren zur Materialflussoptimierung nach einem der vorhergehenden Ansprüche, wobei

    der Proxy-Prozessparameter-Strafterm und/oder der Proxy-Modellparameter-Strafterm einen Strafmultiplizierer $\rho$ enthält und wobei
    das Verfahren umfasst:

    i) Definieren eines Strafmultiplizierers $\rho$;
    ii) eine innere iterative Schleife, in der eine Annäherung an den optimalen Wert der Zielfunktion durch einen Optimierungscode hoher Ebene, der iterativ die Prozessparameter hoher Ebene (x) modifiziert, erfolgt; und
    iii) eine äußere iterative Schleife, in der der Strafmultiplizierer $\rho$ in Abhängigkeit von einem Optimierungskriterium für die innere Schleife modifiziert wird.

11. Verfahren zur Materialflussoptimierung nach einem der vorhergehenden Ansprüche, wobei das Verfahren umfasst

    - Auswählen, durch den Bediener, eines Filters aus einer Vielzahl vorbestimmter Filter, die durch die Benutzerschnittstelle präsentiert werden, und Verwenden des ausgewählten Filters zum Filtern der Ausgabe der Materialflussoptimierung und
    - Präsentieren, durch die Benutzerschnittstelle, einer Empfehlung, die eine oder mehrere bevorzugte Aktion(en) basierend auf der Materialflussoptimierung vorschlägt.

**12.** Integriertes Optimierungssystem zur Materialflussoptimierung in einem industriellen Prozess, wobei der Materialfluss ein Fluss eines Schüttguts in einem kontinuierlichen Materialextraktionsprozess oder einem kontinuierlichen Materialverarbeitungsprozess ist, wobei das integrierte Optimierungssystem umfasst:

- ein Optimierungsmodul hoher Ebene (10), das den Materialfluss durch grobe Prozessparameter hoher Ebene (x) beschreibt und ein Optimierungsprogramm für die Prozessparameter hoher Ebene (x) aufweist, wobei das Optimierungsprogramm eine Zielfunktion aufweist, die Einschränkungen unterliegt und von Modellparametern hoher Ebene (A, b, c) abhängt;
- ein Simulationsmodul niedriger Ebene (30) zum Simulieren des Materialflusses, wobei das Simulationsmodul niedriger Ebene (30) eine Simulationsfunktion niedriger Ebene aufweist, die zum Erhalten detaillierter Materialflussdaten niedriger Ebene (F) basierend auf den Prozessparametern hoher Ebene (x) angepasst ist; wobei

die Simulation niedriger Ebene basierend auf Prozessparametern hoher Ebene durchgeführt wird, die Proxy-Prozessparameter (x̃) sind, die sich iterativ an die Prozessparameter hoher Ebene (x) annähern, wobei

die Proxy-Prozessparameter (x̃) weitere Eingabeparameter des Optimierungsprogramms sind und wobei die Zielfunktion einen Proxy-Prozessparameter-Strafterm aufweist, der eine Abweichung zwischen den Proxy-Prozessparametern (x̃) und den Prozessparametern hoher Ebene (x) bestraft;

- ein Aggregatormodul (40), das eine Aggregatorfunktion aufweist, die zum Berechnen der Modellparameter hoher Ebene (A, b, c) basierend auf den Materialflussdaten niedriger Ebene (F) angepasst ist; und
- die Benutzerschnittstelle;

wobei das integrierte Optimierungssystem dazu ausgelegt ist, das Verfahren nach einem der vorhergehenden Ansprüche auszuführen.

**Revendications**

**1.** Procédé d'optimisation de flux de matières dans un processus industriel en utilisant un système intégré d'optimisation, le flux de matières étant un flux d'un matériau en vrac dans un processus d'extraction continue de matière ou un processus de traitement continu de matière ;

le système intégré d'optimisation comprenant :

- un module optimiseur (10) de haut niveau décrivant le flux de matière par des paramètres de processus de haut niveau (x) grossiers et incluant un programme d'optimisation pour les paramètres de processus de haut niveau (x), le programme d'optimisation dépendant de paramètres de modèle de haut niveau (A, b, c) et comportant une fonction objectif soumise à des contraintes ;
- un module (30) de simulation de bas niveau servant à simuler le flux de matières, le module (30) de simulation de bas niveau comportant une fonction de simulation de bas niveau adaptée pour obtenir des données détaillées (F) de flux de matières de bas niveau sur la base des paramètres de modèle de haut niveau (x), et
- un module agrégateur (40) comportant une fonction d'agrégateur adapté pour calculer les paramètres de modèle de haut niveau (A, b, c) à partir des données (F) de flux de matières de bas niveau,

le procédé comprenant l'approche d'une valeur optimale de la fonction objectif en modifiant itérativement les paramètres de processus de haut niveau (x), une itération comprenant :

a) la réalisation, par le module (30) de simulation de bas niveau, d'une simulation de bas niveau, obtenant ainsi les données détaillées (F) de flux de matières de bas niveau ; dans lequel

la simulation de bas niveau est effectuée sur la base de paramètres de processus de haut niveau qui sont des paramètres substitutifs de processus (x̃) approchant itérativement les paramètres de processus de haut niveau (x), dans lequel
les paramètres substitutifs de processus (x̃) sont d'autres paramètres d'entrée du programme d'optimisation, et dans lequel
la fonction objectif comprend un terme de pénalité de paramètres substitutifs de processus pénalisant un écart entre les paramètres substitutifs de processus (x̃) et les paramètres de processus de haut niveau (x) ;

b) l'agrégation, par le module agrégateur (40), des données (F) de flux de matières de bas niveau, calculant ainsi, à partir des données (F) de flux de matières de bas niveau, des paramètres de modèle de haut niveau agrégés ($f_A$, $f_b$, $f_c$) ; et

c) l'introduction des paramètres de modèle de haut niveau agrégés ($f_A$, $f_b$, $f_c$) dans le programme d'optimisation ; dans lequel

le système comprend une interface d'utilisateur, et le procédé comprend

la sélection, par l'opérateur, d'un scénario à partir d'une pluralité de scénarios prédéterminés présentés par l'interface d'utilisateur, chacun des scénarios prédéterminés comprenant des définitions d'une pluralité de paramètres de modèle appartenant au scénario considéré, et l'utilisation des paramètres de modèle pour l'optimisation de flux de matières.

2. Procédé d'optimisation de flux de matières selon la revendication 1, la simulation de bas niveau étant effectuée sur la base du fait que des paramètres de processus de haut niveau sont

   - des paramètres de processus (x) obtenus lors d'une itération précédente.

3. Procédé d'optimisation de flux de matières selon l'une quelconque des revendications précédentes, la simulation de bas niveau comprenant un modèle non linéaire pour les paramètres de processus (x).

4. Procédé d'optimisation de flux de matières selon l'une quelconque des revendications précédentes, dans lequel la fonction d'agrégation associe les données (F) de flux de matières de bas niveau à des paramètres de modèle de haut niveau ($f_A$, $f_b$, $f_c$).

5. Procédé d'optimisation de flux de matières selon l'une quelconque des revendications précédentes, dans lequel

   le programme d'optimisation utilise comme paramètres de modèle de haut niveau (A, b, c) des paramètres respectifs choisis parmi les suivants :

   - les paramètres de modèle de haut niveau agrégés ($f_A$(x̃), $f_b$(x̃), $f_c$(x̃)) obtenus à l'étape b), ou
   - des paramètres substitutifs de modèle (Ã, b̃, c̃) approchant itérativement les paramètres de modèle de haut niveau agrégés ($f_A$, $f_b$, $f_c$), dans lequel

   les paramètres substitutifs de modèle (Ã, b̃, c̃) sont d'autres paramètres d'entrée du programme d'optimisation, et dans lequel

   la fonction objectif comprend un terme de pénalité de paramètres substitutifs de modèle pénalisant un écart entre les paramètres de modèle substitutif (Ã, b̃, c̃) et les paramètres de modèle de haut niveau ($f_A$, $f_b$, $f_c$).

6. Procédé d'optimisation de flux de matières selon l'une quelconque des revendications précédentes, la fonction objectif étant une fonction

$$c^T x \quad (1),$$

soumise à des conditions aux limites $Ax = b$ (2), où c, x sont des vecteurs de longueur n, b est un vecteur de longueur m et A est une matrice m×n.

7. Procédé d'optimisation de flux de matières selon la revendication 6, dans lequel

   le programme d'optimisation utilise, comme paramètres de modèle de haut niveau A et c dans les expressions (1), (2) les paramètres de modèle de haut niveau agrégés ($f_A$(x̃), $f_c$(x̃)) obtenus à l'étape b), et/ou

   le programme d'optimisation utilise, comme paramètre de modèle de haut niveau b dans l'expression (2), un paramètre substitutif de modèle b̃ approchant itérativement le paramètre de modèle de haut niveau agrégé ($f_b$).

8. Procédé d'optimisation de flux de matières selon l'une quelconque des revendications précédentes, dans lequel une itération du procédé comprend

a) la réalisation de la simulation de bas niveau sur la base des paramètres de processus de haut niveau (x) obtenus par l'optimisation de haut niveau précédente, obtenant ainsi les données (F) de flux de matières de bas niveau ; et

c) la réalisation d'une optimisation de haut niveau sur la base des paramètres agrégés du modèle de haut niveau $(f_A, f_b, f_c)$ obtenus par agrégation des données (F) de flux de matières de bas niveau obtenues par la simulation de bas niveau précédente, obtenant ainsi les paramètres de processus de haut niveau (x).

9. Procédé d'optimisation de flux de matières selon l'une quelconque des revendications précédentes, dans lequel la sortie du module (30) de simulation de bas niveau est utilisée comme entrée dans le module agrégateur (40), qui délivre les paramètres de modèle de haut niveau à utiliser dans le module optimiseur (10) de haut niveau comme entrée pour l'optimisation ; et dans lequel la sortie du module optimiseur (10) de haut niveau est ensuite envoyée en tant qu'entrée au module (30) de simulation de bas niveau.

10. Procédé d'optimisation de flux de matières selon l'une quelconque des revendications précédentes, dans lequel

le terme de pénalité de paramètres substitutifs de processus et/ou le terme de pénalité de paramètres substitutifs de modèle contiennent un multiplicateur de pénalité $\rho$, et dans lequel le procédé comprenant :

i) la définition d'un multiplicateur de pénalité $\rho$ ;
ii) une boucle itérative interne dans laquelle la valeur optimale de la fonction objectif est approchée par un code d'optimisation de haut niveau modifiant itérativement les paramètres de processus de haut niveau (x) ; et
iii) une boucle itérative externe dans laquelle le multiplicateur de pénalité $\rho$ est modifié en fonction d'un critère d'optimisation relatif à la boucle interne.

11. Procédé d'optimisation de flux de matières selon l'une quelconque des revendications précédentes, dans lequel le procédé comprend

- la sélection, par l'opérateur, d'un filtre parmi une pluralité de filtres prédéterminés présentés par l'interface d'utilisateur, et l'utilisation du filtre sélectionné pour filtrer la sortie de l'optimisation de flux de matières ; et
- la présentation, par l'interface d'utilisateur, d'un conseil proposant une ou plusieurs actions préférées basées sur l'optimisation de flux de matières.

12. Système intégré d'optimisation pour l'optimisation d'un flux de matières dans un processus industriel, le flux de matières étant un flux d'un matériau en vrac dans un procédé d'extraction continue de matière ou un procédé de traitement continu de matériaux, le système intégré d'optimisation comprenant :

- un module optimiseur (10) de haut niveau décrivant le flux de matière par des paramètres de processus de haut niveau (x) grossiers et incluant un programme d'optimisation pour les paramètres de processus de haut niveau (x), le programme d'optimisation comportant une fonction objectif soumise à des contraintes et dépendant de paramètres de modèle de haut niveau (A, b, c) ;
- un module (30) de simulation de bas niveau servant à simuler le flux de matières, le module (30) de simulation de bas niveau comprenant une fonction de simulation de bas niveau adaptée pour obtenir des données détaillées (F) de flux de matières de bas niveau sur la base des paramètres de modèle de haut niveau (x), dans lequel

la simulation de bas niveau est effectuée sur la base de paramètres de processus de haut niveau qui sont des paramètres substitutifs de processus ($\tilde{x}$) approchant itérativement les paramètres de processus de haut niveau (x), dans lequel
les paramètres substitutifs de processus ($\tilde{x}$) sont d'autres paramètres d'entrée du programme d'optimisation, et dans lequel
la fonction objectif comprend un terme de pénalité de paramètres substitutifs de processus pénalisant un écart entre les paramètres substitutifs de processus ($\tilde{x}$) et les paramètres de processus de haut niveau (x) ;

- un module agrégateur (40) comprenant une fonction d'agrégateur adaptée pour calculer les paramètres de modèle de haut niveau (A, b, c) à partir des données (F) de flux de matières de bas niveau ; et

- l'interface d'utilisateur ;

le système intégré d'optimisation étant configuré pour mettre en œuvre le procédé selon l'une quelconque des revendications précédentes.

**FIG. 1**

FIG. 2

**FIG. 3**

FIG. 4

## FIG. 5

## FIG. 6

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019072943 A1
- US 2019066236 A1
- US 2020142364 A1
- US 7340328 B2

### Non-patent literature cited in the description

- **WILHELM et al.** D 3 FACT INSIGHT: A SIMULATION-TOOL FOR MULTIRESOLUTION MATERIAL FLOW MODELS. *Proceedings 16th European Simulation Symposium, ESS 2004 Budapest*, 17 October 2004, 17-22, https://www.scs-europe.net/services/ess2004/pdf/manuf-12.pdf
- **GEIβLER BJÖRN et al.** Penalty Alternating Direction Methods for Mixed-Integer Optimization: A New View on Feasibility Pumps. *INTERNET ARTICLE*, 31 July 2017, https://arxiv.org/pdf/1707.09891
- **S. GÖTTLICH ; F. M. HANTE ; A. POTSCHKA ; L. SCHEWE**. Penalty alternating direction methods for mixed-integer optimal control with combinatorial constraints. *ArXiv:1905.13554*, 2019